# EUROPEAN PATENT APPLICATION

(11) **EP 3 599 444 A1**
(43) Date of publication of application: **29.01.2020**
(21) Application number: 19187941.0
(22) Date of filing: 23.07.2019
(51) Int. Cl.: G01C 21/16, G01C 21/02, G01C 21/04

(54) **A NAVIGATION SYSTEM**

(30) Priority: 23.07.2018 GB 201812005
(71) Applicant: Atlantic Inertial Systems Limited, Plymouth, Devon PL6 6DE (GB)
(72) Inventor: SKILTON, Alastair, Plymouth, Devon PL6 6DE (GB); WILKINSON, Nicholas Robert Geoffrey, Plymouth, Devon PL6 6DE (GB)
(74) Representative: Dehns

(57) **Abstract**

According to a first aspect, this disclosure provides a navigation system comprising: an inertial navigation system, INS, arranged to provide an INS position estimate and an INS attitude estimate; a terrain based navigation system arranged to provide a terrain based position estimate; a star tracker system arranged to provide a star tracker position and/or attitude estimate; a navigation filter arranged to receive the INS position estimate, the terrain based position estimate, the INS attitude estimate and the star tracker position and/or attitude estimate; the navigation filter arranged to determine an INS error state based at least on the INS position estimate, the terrain based position estimate, the INS attitude estimate and the star tracker position and/or attitude estimate; and the navigation system arranged to output a navigation solution comprising the INS position estimate corrected by the INS error state and the INS attitude estimate corrected by the INS error state. A star tracker system adds an estimate of position and/or attitude that cannot be obtained from a terrain based navigation system. The attitude estimate is more closely related to the raw sensor data than the position estimate obtained from the terrain based navigation system. For example, where the gyroscopes are rate sensors, the attitude angles are only a single integration away from the raw sensor data, whereas the position estimate obtained by the terrain based navigation system is two integrations away from the raw sensor data from the accelerometers. Attitude feedback from the star tracker to improve estimates of the gyroscope errors is especially useful.

## Description

### Technical field

The present disclosure relates to a navigation system for reducing the amount of error and uncertainty in an inertial navigation system's navigation solution.

### Background

Inertial navigation systems (INS) are often used by vehicles (e.g. aeroplanes, ships, submarines and cars) as part of the vehicle's navigation system to determine the vehicle's navigational data (e.g. position, velocity, acceleration and attitude of the vehicle). The navigational data may for example be used to check whether the vehicle is navigating along a desired route and to determine suitable course corrections when off-route. An estimate of the uncertainty in the data will often also be monitored.

Typically, the vehicle's acceleration and rotation are measured using inertial sensors such as accelerometers and gyroscopes. The INS derives the vehicle's velocity and location information from the outputs of these sensors. Small errors in the measuring capabilities of the accelerometers or in the balance of the gyroscopes can over time lead to build up of large errors in the outputs of the INS. Such errors can lead to significant errors in estimates of vehicle location (and/or velocity, attitude, etc.) and can be problematic for navigation decisions, for example resulting in false course corrections. Typically, the errors in the INS position estimates drift at a rate of around 2 nautical miles per hour due to the integration over time of errors within the accelerometer and gyroscope sensors within the INS.

An INS may form the core of a vehicle's integrated navigation system. The INS itself is self-contained and once initialised has no reliance on other navigation systems or sources of information external to the vehicle. The error characteristics of an INS are such that they are well understood mathematically. Also, while over the duration of a mission the position error may grow to several miles, in the short term the errors are more stable. Where other navigation sensors can provide navigation information, that information can be blended with the INS data in an integrated system using techniques such as Kalman Filtering to model and calibrate the errors in the INS. These errors are then removed from the INS navigation solution to provide the Integrated Navigation Solution. Navigation sensors that may be used to support the INS in an integrated system typically include GPS, radio navigation aid or Terrain Referenced Navigation (TRN).

Even in an integrated system, there are situations where the INS will provide the primary source of navigation data for the vehicle. Such situations may arise where other navigation aids such as GPS are unavailable or cannot be trusted (e.g. when they are jammed or there is a suspicion that they may be spoofed). The INS navigates by dead reckoning based on the onboard sensors which cannot so easily be jammed or spoofed.

Terrain Referenced Navigation (TRN) systems which integrate aircraft navigation data, radar altimeter data and digital terrain elevation data to generate a navigation solution are in service on a number of airborne platforms and provide a navigation solution and an uncertainty estimate for the navigation solution. Such systems often use the navigation solution from an Inertial Navigation System (INS) as a key input and use INS error calibrating Kalman Filters as a means of integrating the terrain based position measurements derived from terrain map data and radar altimeter measurement of the aircraft's height above ground with the INS data.

TRN systems can also have reduced accuracy or possibly be unusable in areas of very flat terrain, particularly over large bodies of water where there are no distinguishing features to provide a reference location. Also, while a radar altimeter has an operational height range that encompasses most aircraft flight envelopes, at higher altitudes the ability to determine altitude from the terrain is reduced. At higher altitudes, the height above ground measurement is typically less accurate as scale factor errors become more significant and the radar beam encompasses more terrain, reducing the TRN system's ability to derive an accurate position measurement. Further, while radar can detect through intervening cloud cover, alternatives such as LIDAR or cameras operating in the visible spectrum cannot see through clouds and therefore may be less useful at higher altitudes.

Many vehicles employ Kalman Filter type algorithms within their navigation systems to calibrate the errors within the INS using navigation data from other sources such as GPS, Terrain Referenced Navigation, etc. together with an INS error model that understands the relationship between the inertial sensor errors and the navigation errors produced by the INS. Such INS error estimating algorithms may typically then make a set of corrections available to other systems that use the INS navigation solution.

The present disclosure seeks to provide an improved navigation system.

### Summary

According to a first aspect, this disclosure provides a navigation system comprising:
an inertial navigation system, INS, arranged to provide an INS position estimate and an INS attitude estimate;
a terrain based navigation system arranged to provide a terrain based position estimate;
a star tracker system arranged to provide a star tracker position and/or attitude estimate;
a navigation filter arranged to receive the INS position estimate, the terrain based position estimate, the INS attitude estimate and the star tracker position and/or attitude estimate;
the navigation filter arranged to determine an INS error state based at least on the INS position estimate, the terrain based position estimate, the INS attitude estimate and the star tracker position and/or attitude estimate; and
the navigation system arranged to output a navigation solution comprising the INS position estimate corrected by the INS error state and the INS attitude estimate corrected by the INS error state.

The inertial navigation system typically comprises accelerometers that directly measure acceleration and gyroscopes which measure rotational rates combined to form an Inertial Measurement Unit (IMU). The inertial navigation system integrates the acceleration and the rotation rates to determine vehicle velocity and attitude, and then integrates these to determine the vehicle position. The inertial navigation system may be arranged to provide all of position, velocity, acceleration and attitude estimates. In this document the term attitude is used to mean the full three dimensional orientation of the system (and therefore of the vehicle to which the system is attached/mounted) and may be described by three angles and may include a quaternion representation of such. In typical implementations however these angles are rotations about a local geographic coordinate system and are referred to either as yaw, pitch and roll or alternatively may be referred to as heading, elevation and bank. Therefore the output of the inertial navigation system typically includes a three dimensional position and a three dimensional attitude, e.g. three components of position (such as latitude, longitude and altitude) and three components of attitude (yaw, pitch and roll). The output of the inertial navigation system may also include velocity and/or acceleration (also in three dimensions). Similarly, the INS error state that is provided by the navigation filter comprises estimated errors in each of those components.

The error, and hence accuracy, in the INS position estimates drift overtime, typically at a rate of up to 2 nautical miles per hour (as errors in the inertial sensor measurements integrate into velocity and attitude errors, which in turn integrate into position errors).

The INS error state represents the estimated error in at least the position estimate and attitude estimate (and optionally also the velocity and/or acceleration) from the inertial navigation system (INS). The navigation system may combine the INS position estimate with the INS error state to provide an error corrected position estimate. That is, the navigation system may use the INS error state as a correction function (which may include a plurality of correction values) for correcting the position estimate from the INS.

The INS error state may also comprise data representative of the error in the INS sensor measurements (e.g. accelerometer and gyroscope measurements), attitude errors, and velocity error. Accordingly, it will be appreciated that the INS error state may be used to correct the overall navigation solution provided by the INS.

The use of a star tracker system adds an estimate of position and/ an estimate of attitude that cannot be obtained from the terrain based navigation system. The integrated navigation system therefore provides a navigation solution that will reduce navigation error and estimated uncertainty in the integrated navigation system's navigation solution.

The attitude estimate can be used as an additional observation which can be used to estimate an error of the attitude calculated by the inertial navigation system. A major advantage of this is that the attitude estimate is more closely related to the raw sensor data than the position estimate obtained from the terrain based navigation system. For example, where the gyroscopes are rate sensors, the attitude angles are only a single integration away from the raw sensor data, whereas the position estimate obtained by the terrain based navigation system is two integrations away from the raw sensor data from the accelerometers. In the case of strapdown systems (i.e. where the accelerometers are fixed to the platform rather than mounted on a gimbal), the attitude is used in all other positioning calculations as it is used to calculate the orientation of the accelerometer sensors. Therefore attitude feedback from the star tracker to improve estimates of the gyroscope errors is especially useful. Therefore in preferred examples, the star tracker system is arranged to provide a star tracker attitude estimate, the navigation filter is arranged to receive the star tracker attitude estimate and the navigation filter is arranged to determine the INS error state based on at least the star tracker attitude estimate.

The star tracker system may include algorithms arranged to convert sensor data, e.g. from an imaging sensor such as a CCD array or the like, into attitude information. The star tracker system may include algorithms arranged to match the apparent magnitude and relative positions of objects in the sensor data with prestored almanac data in a database for a number of objects with known apparent magnitudes and positions. The star tracker system may include algorithms arranged to compensate for at least one of: refraction, absorption and scattering due to the atmosphere, and sensor smear due to movement (e.g. rotation) of the sensor. The star tracker may also be arranged to detect the horizon and therefore be able to determine (via suitable algorithms) the positions of the detected objects relative to the horizon. This allows the star tracker to determine a position in addition to determining an attitude.

The star tracker system may comprise: a database containing position information on stars, said information preferably including, but not limited to apparent magnitude, declination from celestial equator and sidereal hour angle or equivalent data.

The navigation solution is therefore improved by extending the capabilities of current Terrain Referenced Navigation systems to include the ability to integrate navigation inputs from a Star Tracker to enhance navigation performance, especially in flight regimes where current performance will be degraded due to lack of terrain information (e.g. flight over flat terrain or water, or flight at altitudes above the radar altimeter performance envelope) and lack of satellite navigation input (e.g. due to spoofing or jamming).

The navigation system may further comprise a global navigation satellite system arranged to provide a satellite position estimate; wherein the navigation filter is arranged to receive the satellite position estimate; and wherein the navigation filter is arranged to determine the INS error state further based on the satellite position estimate. A global navigation satellite system such as the Global Positioning System, the GLONASS system or the Galileo system can provide a relatively accurate position estimate (and through monitoring of consecutive positions, also a velocity estimate) for the navigation system. The accuracy of such a global navigation satellite system (accurate to around 10 metres) is generally better than can be obtained from the terrain based navigation system (typically accurate to around 10 to 50 metres depending on the roughness of the terrain along the flight profile) and therefore provides much better feedback on the accuracy of the inertial navigation system and provides improved estimates of the INS error. However, there are circumstances in which a global navigation satellite system may not be able to provide a reliable navigation solution, for example the satellite system operator can degrade the accuracy of the positioning signal or, the signal can be spoofed or jammed by the presence of other strong signal sources close to the receiver. However, in such situations, the terrain based navigation system can still provide a position estimate. Equally, the terrain based navigation system cannot always provide a useful position estimate. For example there may be circumstances in which it is undesirable or forbidden for the system to emit strong radiation which prevents the use of radar or LIDAR (although optical camera based systems could still be used if environmental conditions allow). Also, in flat or featureless terrain it may be impossible for the terrain based navigation system to get a location fix or its accuracy may be lowered. In such situations, the use of a satellite navigation system is a good alternative, if available.

The star tracker system may be arranged to provide a star tracker position estimate; the navigation filter may be arranged to receive the star tracker position estimate; and the navigation filter may be arranged to determine the INS error state based on at least the star tracker position estimate. A star tracker with the ability to provide a reliable position uses uniquely identifiable characteristics of the stars, including apparent magnitude and position at any given time. Normally, 58 stars are used, including Polaris and a standard catalog of 57 other navigational stars. A greater number of visible stars allows finer precision with the drawback of requiring a longer exposure time on the sensor and increased processing to perform the necessary calculations. To provide a position estimate, the star tracker additionally uses the current time and information on the local vertical direction so that the elevations of the stars can be used to triangulate the current position (at least two starts are required to give a latitude and longitude). The information on the local vertical may be obtained by detecting the position and orientation of the horizon and/or through other sensors such as accelerometers and/or magnetometers) and/or through position information from other systems (such as TRN or satellite systems) which can be used to generate a virtual horizon (this may be useful in cases where the horizon is obscured by terrain and/or weather conditions). The resulting position estimate (accurate to around 100 metres) is still usually not as good as a good position estimate from a satellite navigation system (accurate to around 10 metres), but in the absence of such a system (or suitable signal) it provides another good position estimate that can be combined with the INS position estimate and the terrain based navigation estimate. If both satellite based navigation and terrain based navigation are unavailable, the star tracker position estimate may be the only independent measurement that can be used to update the INS error state. Otherwise, it adds to the available measurements, improving accuracy and reducing overall uncertainty in the INS error state.

It will be appreciated that while the star tracker may provide only one of a position estimate or an attitude estimate, depending on what is required in the system, it is preferred that the star tracker provides both a position estimate and an attitude estimate for improved navigation.

As the attitude measured by the star tracker is generally of high accuracy, it may be advantageous to supply the star tracker attitude directly to the terrain based navigation system. The attitude measurement may be used to help the terrain matching algorithm by informing the algorithm of the relative angle between the terrain measurement unit (e.g. radar altimeter, etc.) and the actual terrain. This may significantly reduce the amount of processing required to match the terrain and may improve the accuracy of the solution provided by the terrain based navigation system. This will be more important where the terrain sensor has a narrow field of view and therefore knowing the sensor's attitude becomes more important. This will be the case for example with LIDAR sensors which have a narrower field of view than radar altimeters. Radar altimeters have a typical field of view of a few tens of degrees. A fixed, i.e. non-scanning, LIDAR system has a field of view which is effectively zero, or only a few degrees, although scanning LIDAR systems may have larger FOVs.

The error in position estimate from the navigation system as a whole may still drift if deprived of input but it will drift at a lower rate than the 2 nautical miles per hour exhibited by the INS solution alone and, in general, the position estimate from the navigation system will be more accurate than the individual INS, terrain based, satellite based and/or star based position estimates. This is because the navigation system position estimate benefits from the correction applied by the updated INS Error State which takes account of all available estimates.

At greater altitudes, the accuracy of the terrain based navigation system reduces and the accuracy of the star tracker system increases due to the reduction in ambient light and the lower absorption of light from the stars by the atmosphere. The accuracy of the star tracker is greater towards the zenith where refraction is minimal. The navigation system may be arranged to vary the weight that is given to its various inputs such as the terrain based navigation system and the star tracker. As the accuracy of each system degrades, the weight given to that measurement in the overall navigation solution is decreased while inputs with high accuracy are given an increased weight. In some examples, the weight may be monitored and adjusted continuously as part of the filter operation. In other examples, the weight may be artificially set or influenced where other measurements indicate low expected accuracy. In some examples the terrain based navigation system may have its weight decreased or may even be disabled above a threshold altitude. At high altitudes, the position estimate from the star tracker may be much better than that of the terrain based navigation (which may even not be able to provide a solution at all, especially if travelling above the operational range of a radar altimeter) and therefore overall accuracy can be improved by weighting the navigation solution inputs accordingly. Similarly, at low altitudes, the star tracker becomes less effective due to greater absorption, refraction and scattering in the atmosphere making it difficult to see the required stars. This can also be the case during high roll rate manoeuvres where the effect of motion smear is most pronounced. There may also be difficulties at very low altitude (e.g. on the ground) due to large terrain features blocking significant portions of the sky and therefore hindering star based positioning. Therefore as above, the navigation system may be arranged to vary the weight that is given to the star tracker measurements, either as part of the continuous filter operation, or by adjusting the weight based on other known factors such as known performance characteristics of the sensor. For example, the weight of the star tracker may be decreased or it may even be disabled below a threshold altitude and/or in certain types of terrain. The threshold for adjusting the weight of the terrain based navigation system and the threshold for adjusting the weight of the star based navigation system could be the same, but will most likely be different thresholds (e.g. different altitudes). Most preferably there is an overlap region in which both systems are operational.

Any form of navigation filter may be used to combine the various input measurements and form an estimate of the INS error state. The filter may be a linear quadratic estimator. In preferred examples the navigation filter is a Kalman filter. Preferably an iterative filter is used (such as a Kalman filter) that combines the current INS error state with the new measurements that are available and combines these to provide a new and improved iteration of the INS error state. In other examples, the iterative filter comprises another type of "predictor corrector" algorithm. The Kalman filter may be a modified Kalman filter such as an extended Kalman filter. The Kalman filter may include an error model that models and propagates the INS error state. The Kalman filter preferably models the relationship between the inertial sensors and the navigation errors produced by the INS. In each iteration, the Kalman filter preferably updates the propagated error state based on the INS error state, the terrain based position estimate and the star tracker attitude estimate. It will be appreciated that Kalman filters are a type of "predictor corrector" iterative algorithm that uses least squares estimation within the correction or measurement step (i.e. update step). As with a Kalman filter, such least squares estimators provide an estimate of a subsequent state based on prior states. Thus, it will be appreciated that in some examples the iterative filter may comprise a least squares estimator.

Preferably uncertainties of each state variable are also estimated and updated in each iteration. The filter preferably also comprises a dynamic model that models the system dynamics and predicts how the current INS state is expected to evolve over time to the next iteration, this being combined with the measurement data to provide the new filter output.

Thus the accuracy of the INS error state estimate is improved by repeatedly updating the INS error state based on the current INS error state, the terrain based position estimate and the star tracker attitude estimate. In this way, it will be appreciated that as a result of the updating step the next iteration of the iterative filter is arranged to inherit an INS error state based on the parameters and calculations of the preceding iteration. In particular, it will be appreciated that the next iteration of the iterative filter will use an INS error state based on the INS error state of the current iteration, the terrain based position estimate and the star tracker attitude estimate.

By monitoring the uncertainties in each estimate the iterative filter can weight the different position estimates according to their estimated uncertainties, placing more weight on position estimates that have lower uncertainty.

The star tracker may optionally consist of a purpose built tracker that is integrated into the navigation system with complimentary star pattern (constellation) matching. Alternatively, the star tracker may be a modular solution (e.g. an off-the-shelf product) that is arranged to provide the required inputs to the navigation system.

The terrain based navigation system is preferably arranged to determine the terrain based position estimate based on a correlation between measured terrain profile data and stored terrain profile data in a terrain map (e.g. digital terrain elevation data). The measured terrain profile data may be obtained using any suitable sensor or detection equipment. However, in some preferred examples, a radar altimeter or laser altimeter is used. The terrain profile data may comprise surface topology measurements such as surface height measurements. In traditional Terrain Referenced Navigation (TRN) systems the INS output is used to provide a coarse position estimate. The TRN algorithms then generate a correction to the INS position based on the matching of the radar (or laser) altimeter data with the terrain elevation data.

This disclosure also extends to a vehicle comprising a navigation system according to any of the above examples (optionally including any or all of the preferred or optional features described above).

According to another aspect of this disclosure, there is provided a method of determining an INS error state, the method comprising:
receiving an INS position estimate and an INS attitude estimate from an inertial navigation system;
receiving a terrain based position estimate from a terrain based navigation system;
receiving a star tracker position and/or attitude estimate from a star tracker system;
determining in a navigation filter an INS error state based at least on the INS position estimate, the terrain based position estimate, the INS attitude estimate and the star tracker position and/or attitude estimate; and
outputting a navigation solution comprising the INS position estimate corrected by the INS error state and the INS attitude estimate corrected by the INS error state.

The features described above in relation to the system, including the preferred and optional features, apply equally to the iterative method.

Thus the method may further comprise: receiving a satellite position estimate from a global navigation satellite system; wherein the navigation filter determines the INS error state further based on the satellite position estimate.

The method may further comprise: receiving a star tracker position estimate from the star tracker system; wherein the navigation filter determines the INS error state further based on the star tracker position estimate.

The method may further comprise: accessing a database containing information on stars, including, but not limited to apparent magnitude, declination from celestial equator and sidereal hour angle or equivalent data and matching star tracker sensor data to the information from the database.

The method may further comprise: identifying the stars (or other objects) visible to the star tracker, and/or compensating for motion smear and/or compensating for atmospheric effects such as absorption, refraction and scattering. The stars (or other objects) may be identified by performing a matching or correlation process with the data contained within the database.
The navigation filter may be a Kalman filter.

This disclosure also extends to a computer-readable medium comprising instructions that are executable by a processor to perform any of the above-described methods.

This disclosure also extends to apparatus comprising a processor and a memory, the memory storing instructions that are executable by the processor to perform any of the above-described methods.

### Brief description of drawings

One or more non-limiting examples will now be described, with reference to the accompanying drawings, in which:
Fig. 1 illustrates a schematic diagram of a navigation system 100 in accordance with the present disclosure;
Fig. 2 illustrates a vehicle having a navigation system 100 provided thereon;
Fig. 3 illustrates a method 300 of determining an INS error state.

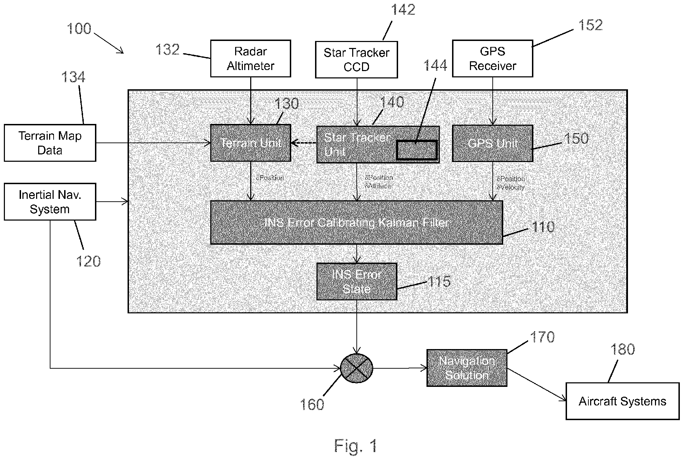

The navigation system 100 shown in Fig. 1 is for a vehicle such as an aircraft, a car, a boat or a rocket. The navigation system 100 comprises a navigation filter 110 which may take the form of an iterative algorithm such as a Kalman filter. In this particular example the navigation filter 110 is a Kalman filter designed to calibrate the error in an inertial navigation system (INS) 120.

The navigation filter 110 is arranged to receive inputs from various sources which include the current output of the INS 120, the output from a terrain based navigation unit 130, the output of a GPS unit 150 and the output from a star tracker 140.

The INS 120 is arranged to output a position and an attitude calculated from the outputs of linear accelerometers and gyroscopes mounted to the vehicle. The INS 120 may of course provide other navigation data such as the velocity, roll, pitch, and yaw of the vehicle based on the accelerometer and/or gyroscope readings. Such estimates drift over time and therefore the rest of the system is designed to use the other systems to monitor and keep track of an estimated error in the INS. This estimated error takes the form of an INS error state 115 which is repeatedly (iteratively) updated by the navigation filter 110 based on the various inputs that it receives.

The output from terrain based navigation unit 130 is a position estimate calculated by matching terrain measurements from radar altimeter 132 with stored terrain map data 134. It will be appreciated that in other examples a different terrain detection sensor such as a LIDAR or camera based system may be used for terrain matching instead of a radar, but the same principles apply, namely that a correlation is performed between the measured data and the stored data to provide an estimate of current position which is provided to the navigation filter 110 for further processing. The digital terrain map data 134 comprises information on the surface topology and/or surface images (depending on the detector being used) which typically includes terrain elevation information above a reference surface (e.g. above a geoid or other reference surface) and possibly other such terrain profile data. Such digital terrain maps 134 may be obtained from, for example, government survey agencies.

The output from the GPS unit 150 is a position estimate (and optionally also a velocity estimate) obtained in known manner by detecting the distance from the receiver 152 to a number of satellites whose locations are accurately known. Velocity may be obtained from the difference between successive position measurements. This is feasible from a satellite system where measurements can be taken at rapid intervals.

The output from star tracker 140 is an attitude estimate obtained by detecting electromagnetic emissions at a variety of wavelengths, from a number of bright celestial objects (including bright stars, but also potentially reflected emissions from satellites and/or the moon) on a charge coupled device (CCD) array 142. Shielding the CCD through filters or shutters to avoid damage to the CCD may be implemented as protection when tracking high apparent magnitude celestial objects. As the orientation of the earth relative to those bright celestial objects is well known, measurement of the current angle to those objects by a sensor fixed relative to the vehicle allows determination of the current orientation (attitude) of the vehicle relative to the earth. As well as providing an attitude estimate, star tracker 140 can also provide a position estimate of the vehicle if it has a detailed enough almanac of bright celestial objects and can match enough of those objects. Such almanac data is stored in database 144 as part of star tracker 140.

Advantageously, as the current attitude can be accurately and quickly measured by star tracker 140 and as the correlation processing of the terrain based navigation unit 130 can be greatly facilitated by knowing a current attitude, the attitude estimate from the star tracker 140 can be provided directly to the terrain based navigation unit 130 for direct use as well as being provided to the navigation unit 110 for overall incorporation into the update of the INS error state 115.

The navigation filter 110 outputs a current INS error state 115 based on the most up to date information that it has received and processed. The output of the INS 120 is then combined at processing block 160 with the current INS error state 115 to provide a best estimate of current vehicle position, referred to as the navigation solution 170. This navigation solution 170 is then provided to other vehicle systems 180 (in this example, the vehicle is an aircraft, but it will be appreciated that the system 100 applies equally to other vehicles).

It will be appreciated that the navigation filter 110 may be arranged to calculate (and repeatedly update) estimates of the uncertainty in each source of position and attitude and can apply weights to the data received from each source according to those estimated uncertainties. In this way the more reliable information is given stronger weight when updating the INS error state 115.

The various methods described herein may be implemented by one or more computer program products or computer readable media provided on one or more devices. The computer program product or computer readable media may include computer code arranged to instruct a computer or a plurality of computers to perform the functions of one or more of the various methods described herein. The computer program and/or the code for performing such methods may be provided to an apparatus, such as a computer, on a computer readable medium or computer program product. The computer readable medium may be transitory or non-transitory. The computer readable medium could be, for example, an electronic, magnetic, optical, electromagnetic, infrared, or semiconductor system, or a propagation medium for data transmission, for example for downloading the code over the Internet. Alternatively, the computer readable medium could take the form of a physical computer readable medium such as semiconductor or solid state memory, magnetic tape, a removable computer diskette, a random access memory (RAM), a read-only memory (ROM), a rigid magnetic disc, and an optical disk, such as a CD-ROM, CD-R/W or DVD. An apparatus such as a computer may be configured in accordance with such code to perform one or more processes in accordance with the various methods discussed herein. Such an apparatus may take the form of a data processing system. Such a data processing system may be a distributed system. For example, such a data processing system may be distributed across a network. Some of the processes may be performed by software on a user device, while other processes may be performed by software on a server, or a combination thereof.

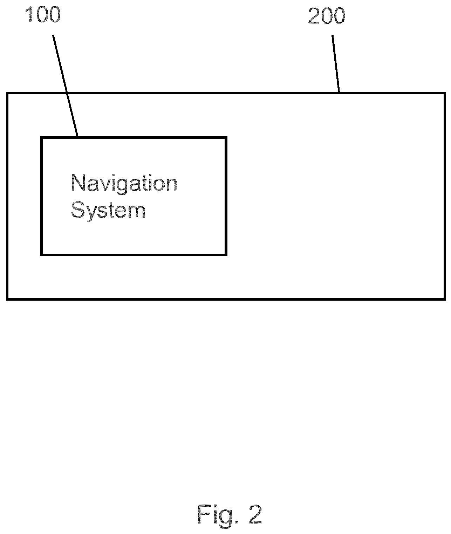

Figure 2 illustrates a vehicle 200 having a navigation system 100 provided thereon. The vehicle may be an aircraft, but also in other examples could be a ground based vehicle or a boat.

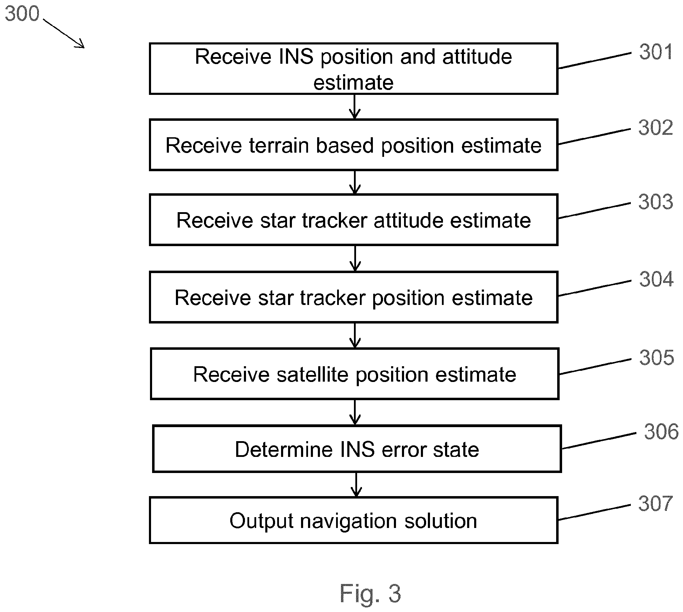

Figure 3 illustrates a method 300 of determining an INS error state as discussed above. In step 301 an INS position estimate and an INS attitude estimate are received from the INS 120. In step 302 a terrain based position estimate is received from terrain based navigation unit 130. In step 303 a star tracker attitude estimate is received from star tracker 140. In step 304 a star tracker position estimate is received from star tracker 140. In step 305 a satellite position estimate is received from global navigation satellite system 150. In step 306 all of the above received estimates of position and attitude are combined together in the navigation filter 110 which outputs the navigation solution in step 307. The navigation solution 307 is then re-used in each iteration of the filter 110's operation alongside the new estimates received from the various external systems 120, 130, 140, 150.

## Claims

1. A navigation system comprising:
an inertial navigation system, INS, arranged to provide an INS position estimate and an INS attitude estimate;
a terrain based navigation system arranged to provide a terrain based position estimate;
a star tracker system arranged to provide a star tracker position and/or attitude estimate;
a navigation filter arranged to receive the INS position estimate, the terrain based position estimate, the INS attitude estimate and the star tracker position and/or attitude estimate;
the navigation filter arranged to determine an INS error state, based at least on the INS position estimate, the terrain based position estimate, the INS attitude estimate and the star tracker position and/or attitude estimate; and
the navigation system arranged to output a navigation solution comprising the INS position estimate corrected by the INS error state and the INS attitude estimate corrected by the INS error state.

2. A navigation system as claimed in claim 1, wherein the star tracker system is arranged to provide a star tracker position estimate;
wherein the navigation filter is arranged to receive the star tracker position estimate; and
wherein the navigation filter is arranged to determine the INS error state further based on the star tracker position estimate.

3. A navigation system as claimed in claim 1 or 2, wherein the star tracker system includes algorithms arranged to convert sensor data from a sensor into said star tracker attitude estimate.

4. A navigation system as claimed in claim 3, wherein the star tracker system includes algorithms arranged to compensate for at least one of: refraction, absorption and scattering due to the atmosphere, and sensor smear due to movement of the sensor.

5. A navigation system as claimed in any preceding claim, wherein the star tracker system comprises a database containing position information on stars, said information preferably including, apparent magnitude, declination from celestial equator and sidereal hour angle.

6. A navigation system as claimed in any preceding claim, further comprising a global navigation satellite system arranged to provide a satellite position estimate;
wherein the navigation filter is arranged to receive the satellite position estimate; and
wherein the navigation filter is arranged to determine the INS error state further based on the satellite position estimate.

7. A navigation system as claimed in any preceding claim, wherein the navigation filter is a Kalman filter.

8. A navigation system as claimed in any preceding claim, wherein the terrain based navigation system is arranged to determine the terrain based position estimate based on a correlation between measured terrain profile data and stored terrain profile data in a terrain map.

9. A navigation system as claimed in claim 8, wherein the terrain based navigation system comprises a radar altimeter or laser altimeter arranged to measure the terrain profile data.

10. A vehicle comprising a navigation system as claimed in any of claims 1 to 9.

11. A method of determining an INS error state, the method comprising:
receiving an INS position estimate and an INS attitude estimate from an inertial navigation system;
receiving a terrain based position estimate from a terrain based navigation system;
receiving a star tracker position and/or attitude estimate from a star tracker system;
determining in a navigation filter an INS error state based at least on the INS position estimate, the terrain based position estimate, the INS attitude estimate and the star tracker position and/or attitude estimate; and
outputting a navigation solution comprising the INS position estimate corrected by the INS error state and the INS attitude estimate corrected by the INS error state.

12. A method as claimed in claim 11, further comprising:
receiving a star tracker position estimate from the star tracker system;
wherein the navigation filter determines the INS error state further based on the star tracker position estimate.

13. A method as claimed in claim 11 or 12, where the system compares the position observed by the star tracker with a known database, compensating for motion effects and atmospheric effects.

14. A method as claimed in claim 10 or 11, further comprising:
receiving a satellite position estimate from a global navigation satellite system;
wherein the navigation filter determines the INS error state further based on the satellite position estimate.

15. A method as claimed in any of claims 10 to 14, wherein the navigation filter is a Kalman filter.
